# EUROPEAN PATENT SPECIFICATION

(11) **EP 1 030 499 B1**
(45) Date of publication and mention of the grant of the patent: **10.01.2007**
(21) Application number: 99103139.4
(22) Date of filing: 18.02.1999
(51) Int. Cl.: H04M 1/02, H04B 1/38

(54) **Mobile phone with pivotable antenna**
Mobiltelefon mit schwenkbarer Antenne
Téléphone mobile avec antenne pivotante

(43) Date of publication of application: 23.08.2000
(73) Proprietor: ROBERT BOSCH GMBH, 70442 Stuttgart (DE)
(72) Inventor: Rasmussen, Ole, 9490 Pandrup (DK)

(56) References cited:
- EP-A- 0 644 607
- EP-A- 0 650 282
- EP-A- 0 661 825
- WO-A-97/03511
- GB-A- 2 325 109
- PATENT ABSTRACTS OF JAPAN vol. 096, no. 005, 31 May 1996 (1996-05-31) & JP 08 018478 A (SONY CORP), 19 January 1996 (1996-01-19)

## Description

### Prior art

The invention proceeds from a mobile phone in accordance with the generic class of the independent patent claim.

Mobile phones with an antenna element are already well known.

EP-A 0 644 607 shows a mobile phone with an antenna element pivotally mounted in a back-side of the phone and adapted to move way from said back-side of the mobile phone when an outgoing call is initiated or an incoming call is answered at the mobile phone.

Also EP-A 0 661 825 shows such a solution.

Such a mobile phone has the advantage that the antenna element is pivotally mounted in a back-side of the mobile phone, and that the antenna element moves away from the back-side of the mobile phone when an outgoing call is initiated or an incoming call is answered at the mobile phone. In this way, a small and compact mobile phone may be provided, which unfolds during a call to enable a relatively large distance between the radiating antenna element and the tissue of the user. Therefore, the radio frequency power, which is absorbed in the head of the user of the mobile phone during a call will be considerably reduced.

The pivotally mounting of the antenna element in the back-side of the mobile phone represents a very simple mechanical solution whereby the antenna element moves away from the back-side of the mobile phone only by pivoting.

### Advantages of the invention

A mobile phone having the characterizing features of the independent patent claim has the advantage consisting in that a microphone plate is provided, that the microphone plate is moveably arranged on the back-side of the mobile phone, that in a first position, the microphone plate is integrated in the surface of the back side of the mobile phone and holds the antenna element close to the back-side of the mobile phone, and that by moving the microphone plate away from the antenna element into a second position where it is accessible for calling, the antenna element moves away from the back-side of the mobile phone, especially by the force of a spring. In this way, the size of the mobile phone, when not in use, may be minimized and the functionality of the microphone plate may be increased such that separate resting means to fix the antenna element close to the back-side of the mobile phone, when no call is activated, may be saved. Furthermore, the use of the mobile phone to initiate or to answer a call is simplified for the user because he only has to move the microphone plate into the second position and the antenna element will move automatically away from the back-side of the mobile phone.

The features of the dependent patent claims enable further improvement of the invention.

It is very advantageous, that a hook-key is provided on the mobile phone for initiating an outgoing call or answering an incoming call, and that the antenna element is provided for moving away from the back-side of the mobile phone when the hook-key is actuated. In this way, the antenna element moves away from the back-side of the mobile phone automatically when the hook-key is actuated by the user such that the use of the mobile phone is simplified for the user.

It is very advantageous, that the antenna element is adapted to function as a hook-key such that an outgoing call is initiated or an incoming call is answered by moving the antenna element away from the back-side of the mobile phone. In this way, a separate hook-key can be saved and the functionality of the antenna element can be increased.

### Drawings

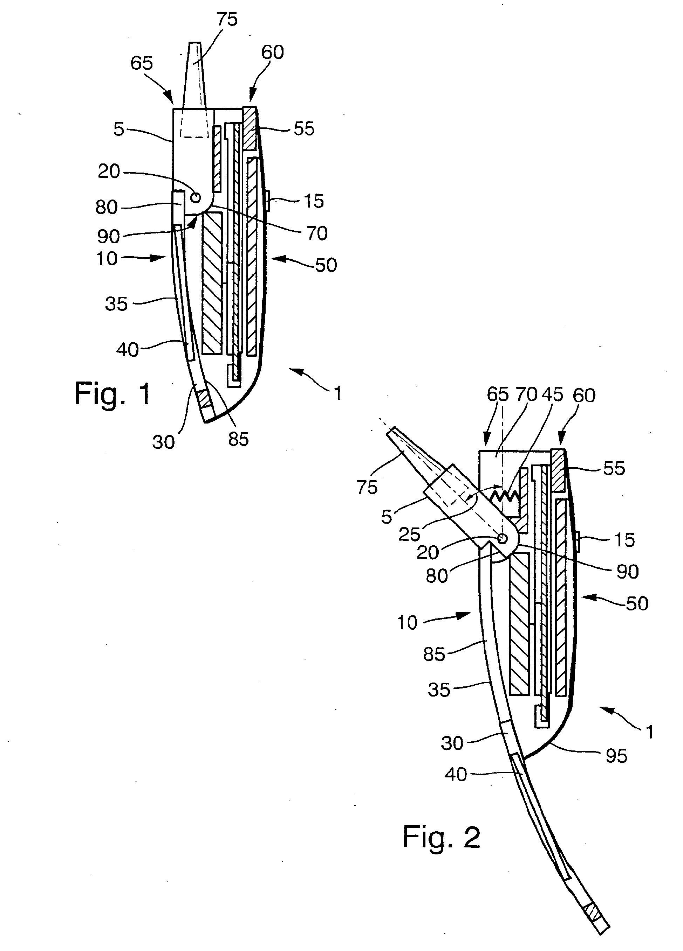

An example of the invention is shown in the figures and explained in greater detail in the description below. Figure 1 shows a mobile phone with a microphone plate in a first position, and figure 2 shows a mobile phone with the microphone plate in a second position.

### Description

In Figure 1, numeral 1 designates a mobile phone. The mobile phone 1 comprises a front-side 50 which will be directed towards a user's head in case of an active call and which comprises a loudspeaker 55 at its top 60. Opposite to the front-side 50, the mobile phone 1 comprises a back-side 10. At a top 65 of the back-side 10, the mobile phone 1 comprises an antenna element 5 opposite to the loudspeaker 55. The antenna element 5 thereby is partly integrated in a cabinet 70 at the top 65 of the back-side 10. A top 75 of the antenna element 5 overtops the cabinet 70 and the top 65 of the back-side 10. The antenna element 5 is pivotally mounted in the cabinet 70 of the back-side 10 via a hinge 20 at a bottom 90 of the antenna element 5 opposite to the top 75 of the antenna element 5. The antenna element 5 further comprises at its bottom 90 and directed towards a surface 35 of the back-side 10 an excavation 80 in which catches a microphone plate 30 such that the antenna element 5 is locked in the cabinet 70. In this way, the microphone plate 30 holds the antenna element 5 as close as possible to the loudspeaker 55 to minimize the size of the mobile phone 1. The microphone plate 30 itself is integrated in the surface 35 of the back-side 10 at a first position. It may thereby be fixed via resting means not shown in figure 1 in a guidance 85 parallel to the surface 35 of the back-side 10. The microphone plate 30 comprises a microphone 40. With the microphone plate 30 completely integrated in the guidance 85 at the back-side 10 according to its first position, the size of the mobile phone 1 may be further minimized in the case, that no call is active and the microphone 40 has not to be used. Such a mobile phone 1 may easily be transported by the user also in small pockets.

On the front side 50 of the mobile phone 1, there may be provided a hook-key 15 for initiating an outgoing call or answering an incoming call.

Figure 2 shows the mobile phone 1 in a second position of the microphone plate 30. In figure 2, same parts of the mobile phone 1 are designated by the same numerals or numbers as in figure 1. The microphone plate 30 is movably arranged in the guidance 85 of the back-side 10 of the mobile phone 1. In this way, it may be moved from the first position according to figure 1 parallel to the surface 35 of the back-side 10 into its second position according to figure 2. Thereby, the microphone plate 30 overtops a bottom 95 of the mobile phone 1 such that the microphone 40 is accessible for calling. The guidance 85 thereby is essentially empty. As the microphone plate 30 in its second position is moved away from the antenna element 5, it doesn't catch anymore in the excavation 80 of the antenna element 5. In this way, the antenna element 5 isn't locked anymore in the cabinet 70 and may be moved, by actuation of the user, by the force of a spring 45 according to figure 2 or by any other suitable mechanism away from the back-side 10 of the mobile phone 1. The antenna element 5 thereby is tilt by the hinge 20 in a predetermined angle 25 away from the back-side 10. In this way, the distance between the antenna element 5 and the loudspeaker 55 reaches a maximum, such that radiation of radio frequency power into the head of the user during a call is considerably reduced.

The arrangement of the antenna element 5 and the microphone plate 30 as described according to figure 2, where the microphone plate 30 is shown in its second position, represents the arrangement of the mobile phone 1 during an active call, i. e. a conversation mode. To initiate an outgoing call or to answer an incoming call, the antenna element 5 has to be moved away from the back-side 10 of the mobile phone 1 as described above. This movement of the antenna element 5 may be initiated by actuation of the hook-key 15. The hook-key 15 may be saved if the antenna element 5 itself functions as a hook-key such that an outgoing call is initiated or an incoming call is answered by moving the antenna element 5 away from the back-side 10 of the mobile phone 1 by user actuation, by force of the spring 45, or by any other suitable mechanism when the microphone plate 30 is moved into its second position as described according to figure 2. During an initiated outgoing call or an answered incoming call, the antenna element 5 is tilt in the predetermined angle 25 away from the back-side 10 of the mobile phone 1.

Instead of the spring 45, a magnet, especially a permanent magnet or an electro-magnet, may be used to move the antenna element 5 away from the back-side 10 of the mobile phone 1.

In an example, not falling within the scope of the claims, it is not necessary, that the antenna element 5 is locked by the microphone plate 30. It may also be locked by a mechanical or an electro-magnetical switch such that the arrangement of a movable microphone plate 30 is not necessary for the realization of the mobile phone 1 according to the invention. A mechanical switch thereby can be actuated by the user when an outgoing call is initiated or an incoming call is answered at the mobile phone 1 such that the antenna element 5 moves away from the back-side 10 of the mobile phone 1.The mechanical switch may thereby also function as the hook-key 15. It is thereby possible to rely the mechanical switch for unlocking the antenna element 5 when an outgoing call is initiated or an incoming call is answered to the actuation of the hook-key 15 in a mechanical way, such that the mechanical switch is actuated automatically when the hook-key 15 is actuated.

If the switch is realized as an electro-magnetical switch, it's function may be integrated in the hook-key 15 such that the actuation of the hook-key 15 changes the polarity of at least one electro-magnet in the cabinet 70 and/or on the antenna element 5 such that the antenna element 5 is moved away from the back-side 10 of the mobile phone 1 when an outgoing call is initiated or an incoming call is answered and that the antenna element 5 is moved towards the back-side 10 i. e. back into the cabinet 70 of the mobile phone 1, when an active call is finished by actuation of the hook-key 15.

If according to figure 2 the microphone plate 30 is moved back into its first position in the guidance 85, it will relock the antenna element 5 in the cabinet 70 and move it towards the loudspeaker 55 against the force of the spring 45. If the antenna element 5 functions as a hook-key, an active call may be finished in this way and the hook-key 15 may be saved.

## Claims

1. Mobile phone (1) with an antenna element (5), the antenna element (5) is pivotally mounted in a back-side (10) of the mobile phone (1), and being provided for moving away from the back-side (10) of the mobile phone (1) when an outgoing call is initiated or an incoming call is answered at the mobile phone (1), **characterized in that** a microphone plate (30) is provided, that the microphone plate (30) is movably arranged on the back-side (10) of the mobile phone (1) that in a first position, the microphone plate (30) is integrated in the surface (35) of the back-side (10) of the mobile phone (1) and is arranged to hold the antenna element (5) close to the back-side (10) of the mobile phone (1), and that the antenna element (5) is arranged to move away from the back-side (10) of the mobile phone (1), especially by the force of a spring (45) by moving the microphone plate (30) away from the antenna element (5) into a second position where it is accessible for calling.

2. Mobile phone (1) according to claim 1, **characterized in that** a hook-key (15) is provided on the mobile phone (1) for initiating an outgoing call or answering an incoming call, and that the antenna element (5) is provided for moving away from the back-side (10) of the mobile phone (1) when the hook-key (15) is actuated.

3. Mobile phone (1) according to claim 1 or 2, **characterized in that** the antenna element (5) is arranged to function as a hook-key such that an outgoing call is initiated or an incoming call is answered by moving the antenna element (5) away from the back-side (10) of the mobile phone (1).

4. Mobile phone (1) according to claim 1,2 or 3, **characterized in that** the antenna element (5) is mounted on a hinge (20), which is adapted to tilt it in a predetermined angle (25) away from the back-side (10) of the mobile phone (1) when an outgoing call is initiated or an incoming call is answered at the mobile phone (1).

## Patentansprüche

1. Mobiltelefon (1) mit einem Antennenelement (5), das schwenkend in einer Rückseite (10) des Mobiltelefons (1) montiert und dazu vorgesehen ist, sich von der Rückseite (10) des Mobiltelefons (1) wegzubewegen, wenn am Mobiltelefon (1) ein abgehender Ruf eingeleitet oder ein eingehender Ruf beantwortet wird, **dadurch gekennzeichnet, dass** eine Mikrofonplatte (30) vorgesehen ist, dass die Mikrofonplatte (30) beweglich auf der Rückseite (10) des Mobiltelefons (1) angeordnet ist, dass die Mikrofonplatte (30) in einer ersten Position in der Oberfläche (35) der Rückseite (10) des Mobiltelefons (1) integriert und so angeordnet ist, dass sie das Antennenelement (5) nahe an der Rückseite (10) des Mobiltelefons (1) hält, und dass das Antennenelement (5) so angeordnet ist, dass es sich von der Rückseite (10) des Mobiltelefons (1) wegbewegt, besonders durch die Kraft einer Feder (45), indem die Mikrofonplatte (30) von dem Antennenelement (5) weg in eine zweite Position, in der es für das Anrufen bereitsteht, bewegt wird.

2. Mobiltelefon (1) nach Anspruch 1, **dadurch gekennzeichnet, dass** eine Gabeltaste (15) am Mobiltelefon (1) vorgesehen ist, um einen abgehenden Ruf einzuleiten oder einen eingehenden Ruf zu beantworten, und dass das Antennenelement (5) vorgesehen ist, um sich von der Rückseite (10) des Mobiltelefons (1) wegzubewegen, wenn die Gabeltaste (15) betätigt wird.

3. Mobiltelefon (1) nach Anspruch 1 oder 2, **dadurch gekennzeichnet, dass** das Antennenelement (5) so angeordnet ist, dass es so als eine Gabeltaste funktioniert, dass ein abgehender Ruf eingeleitet oder ein eingehender Ruf beantwortet wird, indem das Antennenelement (5) von der Rückseite (10) des Mobiltelefons (1) wegbewegt wird.

4. Mobiltelefon (1) nach Anspruch 1, 2 oder 3, **dadurch gekennzeichnet, dass** das Antennenelement (5) an einem Scharnier (20) montiert ist, das in einem vorbestimmten Winkel (25) von der Rückseite (10) des Mobiltelefons (1) wegkippen kann, wenn am Mobiltelefon (1) ein abgehender Ruf eingeleitet oder ein eingehender Ruf beantwortet wird.

## Revendications

1. Téléphone mobile (1) avec un élément d'antenne (5) monté pivotant sur le dos (10) du téléphone mobile (1) et prévu pour s'éloigner du dos (10) de celui-ci lorsqu'un appel sortant est émis ou lorsqu'on répond à un appel entrant sur le téléphone mobile (1),
**caractérisé en ce qu'**
une plaque de microphone (30) est montée mobile sur le dos (10) du téléphone mobile (1), dans une première position, la plaque de microphone (30) est intégrée dans la surface (35) du dos (10) du téléphone mobile (1) et est montée pour maintenir l'élément d'antenne (5) proche du dos (10) du téléphone mobile (1), et l'élément d'antenne (5) est prévu pour s'éloigner du dos (10) du téléphone mobile (1), en particulier par la force d'un ressort (45) en éloignant la plaque de microphone (30) de l'élément d'antenne (5) dans une seconde position où un appel peut être émis.

2. Téléphone mobile (1) selon la revendication 1,
**caractérisé en ce qu'**
une touche de prise de ligne (15) est prévue sur le téléphone mobile (1) pour émettre un appel sortant ou pour répondre à un appel entrant, et l'élément d'antenne (5) est prévu pour s'éloigner du dos (10) du téléphone mobile (1) lorsque la touche de prise de ligne (15) est actionnée.

3. Téléphone mobile (1) selon la revendication 1 ou 2,
**caractérisé en ce que**
l'élément d'antenne (5) est agencé pour fonctionner comme une touche de prise de ligne de sorte qu'un appel sortant soit émis ou qu'on réponde à un appel entrant en éloignant l'élément d'antenne (5) du dos (10) du téléphone mobile (1).

4. Téléphone mobile (1) selon la revendication 1, 2 ou 3,
**caractérisé en ce que**
l'élément d'antenne (5) est monté sur une charnière (20) adaptée pour s'incliner selon un angle prédéterminé (25) loin du dos (10) du téléphone mobile (1) lorsqu'un appel sortant est émis ou lorsqu'on répond à un appel entrant sur le téléphone mobile (1).
